# EUROPEAN PATENT SPECIFICATION

(11) **EP 2 177 264 B1**
(45) Date of publication and mention of the grant of the patent: **15.04.2015**
(21) Application number: 09170967.5
(22) Date of filing: 22.09.2009
(51) Int. Cl.: B01J 21/06, B01J 23/50, B01J 35/04, B01D 46/24, B01D 53/86, B01D 53/94, F01N 3/023, F01N 3/10, F01N 3/022, F01N 3/28

(54) **Exhaust gas purification filter comprising an exhaust gas purification catalyst for cleaning particulate matter and manufacturing method thereof**
Abgasreinigungsfilter bestehend aus einem Abgasreinigungskatalysator für die Entfernung von Feststoffen und sein Herstellungsverfahren
Filtre à particules pour la purification de gaz d'échappement comprenant un catalyseur de purification de gaz d'échappement et son procédé de fabrication

(30) Priority: 24.09.2008 JP 2008244884
(43) Date of publication of application: 21.04.2010
(73) Proprietor: Honda Motor Co., Ltd., Tokyo 107-8556 (JP); Kyushu University, National University Corporation, Fukuoka-shi Fukuoka 812-8581 (JP)
(72) Inventor: Mori, Takeshi, Saitama 351-0193 (JP); Suzuki, Norihiko, Saitama 351-0193 (JP); Furukawa, Atsushi, Saitama 351-0193 (JP); Teraoka, Yasutake, Fukuoka 812-8581 (JP)
(74) Representative: Böhm, Brigitte

(56) References cited:
- EP-A- 0 369 902
- EP-A- 0 890 389
- EP-A- 2 119 491
- WO-A-99/00188
- WO-A-2007/124865
- US-A- 5 534 237
- LANGE DE OLIVEIRA A: "highly selective propene epoxidation with hydrogen/oxygen mixtures over titania-supported silver catalysts" CATALYSIS LETTERS, SPRINGER, DORDRECHT, vol. 73, no. 2-4, 1 January 2001 (2001-01-01), pages 157-160, XP009127280 ISSN: 1011-372X
- MASAAKI HANEDA ET AL: "Additive Effect of Silver on the Catalytic Activity of TiO2 ZrO2 for the Selective Reduction of NO with Propene, 2-Propanol, and Acetone", BULLETIN OF THE CHEMICAL SOCIETY OF JAPAN, CHEMICAL SOCIETY OF JAPAN, TOKYO, JP LNKD- DOI:10.1246/BCSJ.70.499, vol. 70, no. 2, 1 January 1997 (1997-01-01), pages 499-508, XP009138523, ISSN: 0009-2673

## Description

### BACKGROUND OF THE INVENTION

### Field of the. Invention

The present invention relates to an exhaust gas purification catalyst, manufacturing method thereof, and an exhaust gas purification filter. More particularly, the present invention relates to an exhaust gas purification catalyst that enables efficient combustion of particulate matters at low temperatures, manufacturing method thereof, and an exhaust gas purification filter.

In one embodiment the invention relates to the use of an exhaust gas purification catalyst which is applied to an exhaust gas purification filter in cleaning particulate matter included in exhaust gas discharged from an internal combustion engine, the catalyst consisting of Ag supported on TiO₂, wherein the content of the Ag with respect to the TiO₂ is 5% by mass to 30% by mass, wherein the Ag contained in the catalyst exists predominantly as Ag metal except for the outermost surface wherein it exists as Ag₂O.

In a further embodiment the invention relates to an exhaust gas purification filter that collects and cleans particulate matter included in exhaust gas discharged from an internal combustion engine,
the filter comprising a filter main body to which the exhaust gas purification catalyst according to the invention was applied. In yet another embodiment the invention relates to a manufacturing method for an exhaust gas purification catalyst which is applied to an exhaust gas purification filter for purifying particulate matter included in exhaust gas emitted from an internal combustion engine, the method comprising:
a first step of preparing an aqueous solution including TiO₂ and an Ag compound;
a second step of obtaining an exhaust gas purification catalyst in which Ag is supported on TiO₂ by baking the aqueous solution prepared in the first step after evaporating to dryness, wherein the content of the Ag with respect to the TiO₂ is 5% by mass to 30% by mass; and
a third step of applying said exhaust gas purification catalyst onto a filter main body.

### Related Art

In order to clean particulate matter (hereinafter, may be referred to as PM) included in exhaust gas discharged from diesel engines, devices for removing fine diesel particles (Diesel Particulate Filter, hereinafter, may be referred to as a DPF) have been used. PM is primarily derived from fuels, and predominantly constituted from a soluble organic fraction (hereinafter, may be referred to as SOF) being readily combustible matter, and soot constituted with solid carbon (hereinafter, may be referred to as soot) being hardly combustible matter.

The combustion temperature of the SOF is about 200°C to 550°C, and the combustion temperature of the soot is about 550°C to 700°C. Thus, their combustion requires very high temperatures. The SOF has been subjected to early cleaning by loading a noble metal based catalyst on a DPF as in the case of a catalyzed soot filter (hereinafter, may be referred to as CSF); however, purification performance for the soot thereby are low. Therefore, under the current situation, combustion of the soot has been forcedly performed using a regeneration technique or an addition technique of an additive, or the like.

Meanwhile, collection of the PM with the DPF results in not only pressure drop of the exhaust gas, but also loss of the fuel mileage due to carrying out forced regeneration, and melting damage of the DPF and deterioration of the catalyst due to the heat of PM combustion. Accordingly, reduction of the load on automobiles by combustion of the PM including soot at a lower temperature has been desired. As a method of reducing the load on automobiles, decreasing regeneration frequency, using a highly efficient addition technique, as well as continuously combusting the PM only with a catalyst without using a DPF, and the like have been considered. Moreover, development of a catalyst which enables combustion of PM at a low temperature has also been advanced, and noble metal based catalysts, molten salt catalysts and the like have been proposed. Although these catalysts have an effect on the combustion of soot; the combustion temperature for them is as high as 450°C to 600°C.

For example, as a catalyst for combustion of PM in diesel exhaust gas, a catalyst having a metal such as platinum loaded, and manganese oxide on a refractory inorganic base material such as titania has been proposed (see, Patent Document 1). It has been reported that combustion of PM at low temperatures is enabled since a metal such as platinum and manganese oxide are loaded at a specified concentration ratio in this catalyst so as to be located within a region of 10 µm in the depth direction from the surface layer of the catalyst.

In addition, as a catalyst for combustion of PM in diesel exhaust gas, a catalyst produced by loading platinum on titanium oxide which had been loaded on silicon carbide has been proposed (see, Patent Document 2). This catalyst can reportedly oxidize and remove the PM in diesel exhaust gas at low temperatures in an efficient manner.

Furthermore, a PM combustion catalyst produced by loading silver on ceria has been proposed as a catalyst for oxidation and combustion of the PM collected on a DPF (see, Patent Document 3). This catalyst can reportedly oxidize and remove the PM in diesel exhaust gas at low temperatures in an efficient manner.
Patent Document 1: Japanese Patent No. 2577757
Patent Document 2: Japanese Patent No. 3131630
Patent Document 3: Japanese Unexamined Patent Application, First Publication No. 2001-73748

### SUMMARY OF THE INVENTION

However, the temperature of the exhaust gas discharged from current diesel engines is as low as 200°C to 450°C, and thus it is difficult to carry out continuous combustion of the soot in the temperature range of the exhaust gas without conducting a regeneration process. Therefore, development of a catalyst which enables combustion of PM at lower temperatures than in conventionally has been desired.

Furthermore, depending on the driving conditions, the soot altogether may not be combusted. The PM accumulated without combustion cause clogging of the DPF, and the pressure drop from the DPF increases as the amount of the accumulated PM increases. Therefore, it becomes necessary to remove the PM periodically. Under such circumstances, regeneration of the DPF is carried out by elevating the temperature of the DPF using external energy to around 600°C to remove the PM by combustion. This regeneration process leads to many disadvantages such as deteriorated fuel economy, impairment of emission, complicating the system, and the like. In order to reduce these disadvantages, it is necessary to lower the temperature during regeneration.

The present invention was made in view of the foregoing problems, and an object thereof is to provide an exhaust gas purification catalyst which enables combustion of PM in an efficient manner at lower temperatures than those traditionally employed, manufacturing method thereof, and an exhaust gas purification filter.

The present inventors thoroughly investigated in order to solve the aforementioned problems. As a result, it was found that an exhaust gas purification catalyst including Ag supported on TiO₂ can solve the aforementioned problems, and thus the present invention was accomplished. More specifically, the present invention provides as in the following.

According to the present invention, an exhaust gas purification catalyst for cleaning particulate matters included in exhaust gas discharged from an internal combustion engine, includes Ag supported on TiO₂.

The exhaust gas purification catalyst according to the present invention is characterized by including a combination of TiO₂ and Ag, with Ag being supported on the TiO₂. Since TiO₂ has a very small mean primary particle size, it has a great specific surface area. In addition, TiO₂ does not have voids, and is thus non-porous. Therefore, Ag is intimately supported on TiO₂ in the exhaust gas purification catalyst according to the present.invention, and consequently the number of contact points with PM of Ag and Ag₂O being an active species present on the surface increases, whereby combustion of the PM at low temperatures in an efficient manner is enabled.

Moreover, Ag is present on TiO₂ predominantly in the form of an Ag metal, but is present in the form of Ag₂O on the outermost surface thereof. Ag₂O on the outermost surface is reduced by an oxidization reaction during combustion and metalated into Ag in part, but can act as a catalyst effectively since it is supported on TiO₂. Moreover, since Ag supported on TiO₂ having a great specific surface area and being non-porous is fine and in a highly dispersed state, it can be activated again by incorporating oxygen in the ambient air forcedly to turn into Ag₂O. By repeating such metalation into Ag and turning into Ag₂O, the active species Ag₂O can be stably formed on TiO₂, thereby enabling combustion of the PM at low temperatures in an efficient manner.

In the exhaust gas purification catalyst according to the invention, the content of the Ag with respect to the TiO₂ is 5% by mass to 30% by mass.

In the present invention, the content of Ag with respect to TiO₂ is preferably 5% by mass to 30% by mass. Having the Ag content fall within the range of 3% by mass to 60% by mass, superior combustion activity of the PM at low temperatures can be effectively achieved due to a combination of TiO₂ and Ag. In addition, when the Ag content falls within the range of 5% by mass to 30% by mass, removal of the PM by combustion can be executed at still lower temperatures.

According to the invention, in an exhaust gas purification filter that collects and cleans particulate matter included in exhaust gas discharged from an internal combustion engine, the filter includes a filter main body to which the exhaust gas purification catalyst according to the invention was applied.

Since the exhaust gas purification filter according to the present invention has a filter main body to which an exhaust gas purification catalyst including Ag supported on TiO₂ was applied, combustion of the PM collected on the filter main body can be carried out efficiently at low temperatures.

According to another aspect of the invention, in the exhaust gas purification filter according to the invention, the filter main body is a wall-flow type filter including a porous refractory ceramic.

In the exhaust gas purification filter according to the present invention, a filter main body of a wall-flow type constituted with a porous refractory ceramic is used. Due to being of wall-flow type, it is superior in collection efficiency of PM, and favourable contact performance of the PM with the catalyst is provided. Consequently, combustion of the PM at low temperatures can be more efficiently carried out. Furthermore, since a porous refractory ceramic is used, it has superior gas transmittivity, mechanical.strength, and heat resistance, which have been demanded for filters for exhaust gas purification.

According to a further aspect of the present invention, a manufacturing method for an exhaust gas purification catalyst for purifying particulate matter included in exhaust gas emitted from an internal combustion engine, the method includes: a first step of preparing an aqueous solution including TiO₂ and an Ag compound; a second step of obtaining an exhaust gas purification catalyst in which Ag is supported on TiO₂ by baking the aqueous solution prepared in the first step after evaporating to dryness, wherein the content of the Ag with respect to the TiO₂ is 5% by mass to 30% by mass; and a third step of applying said exhaust gas purification catalyst onto a filter main body.

According to the exhaust gas purification catalyst obtained by this manufacturing method, effects similar to those of the exhaust gas purification catalyst according the invention as described above can be achieved.

According to the present invention, an exhaust gas purification catalyst which enables combustion of PM in an efficient manner at lower temperatures than those traditionally employed, manufacturing method thereof, and an exhaust gas purification filter can be provided.

### BRIEF DESCRIPTION OF THE DRAWINGS

FIG. 1 shows a drawing of an exhaust gas purification filter viewed from the inlet side of the exhaust gas;
FIG. 2 shows a schematic cross-sectional view of an exhaust gas purification filter taken along the direction of the gas flow;
FIG. 3 shows a partially enlarged view depicting the partition wall in FIG. 2; and
FIG. 4 is a drawing showing a relationship between the PM combustion peak temperature and the amount of Ag.

### DETAILED DESCRIPTION OF THE INVENTION

Hereinafter, embodiments of the present invention are explained in detail with reference to the drawings.

### Exhaust Gas Purification Catalyst

The exhaust gas purification catalyst according to the present embodiment is for use in cleaning PM included in the exhaust gas discharged from an internal combustion engine, and is characterized by including Ag supported on TiO₂.

Such TiO₂ is not particularly limited, and a commercially available product can be used. Also, the crystal form of TiO₂ is not particularly limited, and either anatase type or rutile type may be used ad libitum. For example, JRC-TIO-4 that is a referent catalyst according to the Catalysis Society of Japan may be used. Since TiO₂ has a very small mean primary particle size, it has a great specific surface area, and is also characteristic in being non-porous.

The source material of Ag is not particularly limited, and, for example, commercially available silver nitrate or the like may be used. Ag has a characteristic of having a specifically high PM combustion activity among noble metals as described later.

When the content of Ag is less than 3% by mass, the number of contact points with the PM of Ag₂O that is the active species present on the surface decreases. Accordingly, combustion of the PM at low temperatures cannot be executed due to performance almost similar to that when TiO₂ alone is included. In contrast, the content of Ag exceeding 60% by mass is also not preferred in view of the cost since still further improvement of the performance cannot be achieved. Therefore, the content of Ag is 5% by mass to 30% by mass.. When the content falls within this range, combustion of the PM at still lower temperatures in a more efficient manner is enabled.

The manufacturing method of the exhaust gas.purification catalyst according to the present embodiment is not particularly limited, and may be manufactured with a conventionally known impregnation method or the like.. More specifically, after a solution containing TiO₂, a silver compound such as silver nitrate, and distilled water in specified amounts is evaporated to dryness, an exhaust gas purification catalyst according to the present embodiment in which Ag is supported on TiO₂ is obtained by baking at a predetermined temperature for a predetermined period of time.

According to the exhaust gas purification catalyst of the present embodiment having the constitution described in the foregoing, the following effects can be achieved.

The exhaust gas purification catalyst according.to the present embodiment is constituted with a combination of TiO₂ and Ag, in which Ag is supported on TiO₂. Since TiO₂ has a very small mean primary particle size, it has a great specific surface area. In addition, TiO₂ does not have voids, and is thus non-porous. Therefore, Ag is intimately supported on TiO₂ in the exhaust gas purification catalyst according to the present embodiment, and consequently the number of contact points with the PM of Ag and Ag₂O being the active species present on the surface increases, whereby combustion of the PM at low temperatures in an efficient manner is enabled.

Moreover, Ag is present on TiO₂ predominantly in the form of an Ag metal, but is present in the form of Ag₂O on the outermost surface thereof. Ag₂O on the outermost surface is reduced by an oxidization reaction during combustion and metalated into Ag in part, but can act as a catalyst effectively since it is supported on TiO₂. Moreover, since Ag supported on TiO₂ having a great specific surface area and being non-porous is fine and in a highly dispersed state, it can be activated again by incorporating oxygen in the ambient air forcedly to turn into Ag₂O. By repeating such metalation into Ag and turning into Ag₂O, the active species Ag₂O can be stably formed on TiO₂, thereby enabling combustion of the PM at low temperatures in an efficient manner. Exhaust Gas Purification Filter

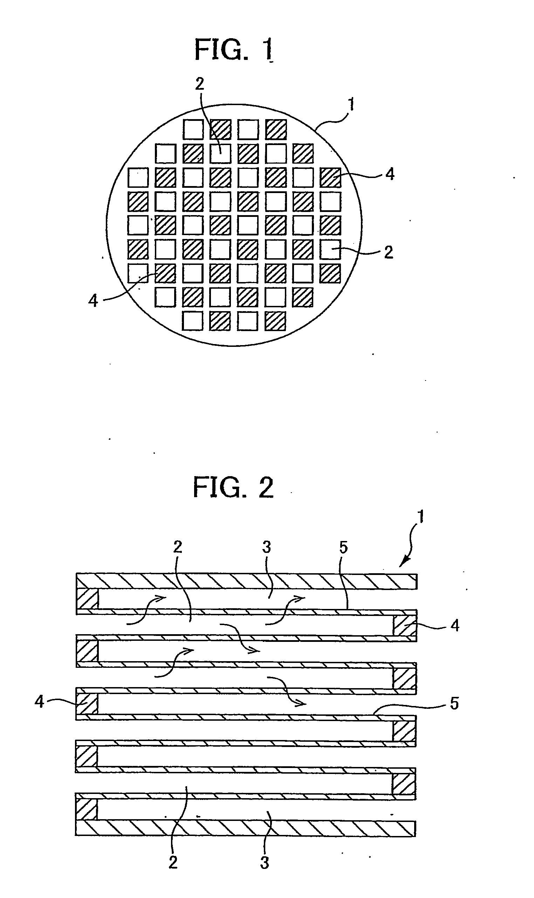

FIG. 1 shows a drawing of an exhaust gas purification filter 1 according to the present embodiment viewed from the inlet side of the exhaust gas. In addition, FIG. 2 shows a schematic cross-sectional view of the exhaust gas purification filter 1 taken along the direction of a gas flow. As shown in FIGS. 1 and 2, the exhaust gas purification filter 1 according to the present embodiment is a wall-flow type DPF having a honeycomb structure, and is provided with many exhaust gas inlet paths 2 and exhaust gas outlet paths 3 running parallel to one another. The exhaust gas inlet path 2 having a downstream end of DPF plugged by a sealing material 4, and the exhaust gas outlet path 3 having an upstream end plugged by the sealing material 4 are provided alternately along the directions of back and forth, and right and left. Also, the exhaust gas inlet path 2 and the exhaust gas outlet path 3 are separated via a thin partition wall 5.

The exhaust gas purification filter 1 has a filter main body formed from a porous material such as silicon carbide or cordierite. The exhaust gas entering the exhaust gas inlet path 2 flows out by passing through the surrounding partition wall 5, and flowing into the adjacent exhaust gas outlet path 3, as shown by arrows in FIG. 2.

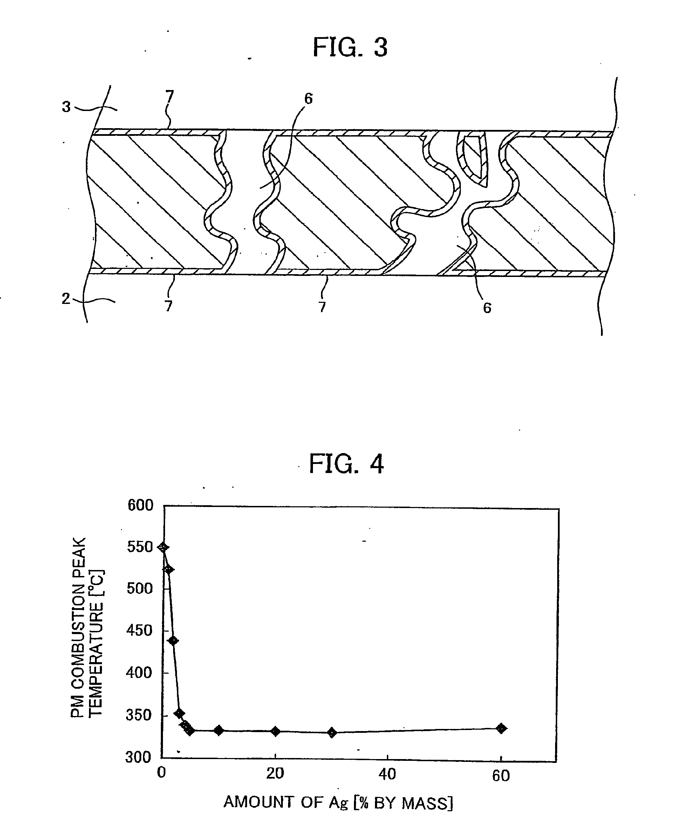

FIG. 3 is now referred to, which shows a partially enlarged view depicting the partition wall 5 shown in FIG. 2. As shown in FIG. 3, the partition wall 5 has fine pores (exhaust gas flow path) 6 that communicate the exhaust gas inlet path 2 with the exhaust gas outlet path 3, and the exhaust gas passes through these pores 6. In addition, a catalyst layer 7 is coated on the wall surface of the exhaust gas flow path constructed with the exhaust gas inlet path 2, the exhaust gas outlet path 3, and the pores 6. The catalyst layer 7 is formed from the exhaust gas purification catalyst according to the aforementioned embodiment characterized by supporting Ag on TiO₂.

According to the exhaust gas purification filter 1 of the present embodiment, the following effects are achieved.

Since the exhaust gas purification filter 1 is a DPF of wall-flow type, it is superior in collection efficiency of the PM, and achieves favorable contact performance of the PM with the catalyst. Thus, by providing the catalyst layer 7 formed from the exhaust gas purification catalyst according to the aforementioned embodiment having a high PM combustion activity at low temperatures, the exhaust gas purification filter 1 enables combustion of the PM collected on the filter main body at low temperatures in an efficient manner.

For example, the filter main body may have a three-dimensional network structure and is acceptable as long as a sufficient PM-collecting function is provided, and a filter formed with a foam metal, a foam ceramic, a nonwoven fabric produced by laminating a metal or a ceramic fiber may be used.

### EXAMPLES

Next, the present invention is explained in more detail by way of Examples, but the present invention is not limited thereto.

### Comparative Example 1: 3% by mass Ag/TiO₃ + PM (5% by mass)

JRC-TIO-4 that is a reference catalyst according to the Catalysis Society of Japan, silver nitrate, and distilled water were weighed to give a predetermined composition, whereby an aqueous solution was obtained. This aqueous solution was evaporated to dryness with an evaporator, and dried at 200°C for 2 hrs, followed by baking at 700°C for 2 hrs (impregnation method). The product was subjected to particle size regulation, and thus a catalyst of no larger.. than 2 µm was obtained. This catalyst in an amount of 9.5 mg was mixed with 0.5 mg of PM, and tight contact was permitted by mixing while grinding with a mortar and a pestle to give a sample of Comparative Example 1.

### Comparative Example 2: 4% by mass Ag/TiO₂ + PM (5% by mass)

A catalyst was obtained in a similar manner to Comparative Example 1, except that the content of Ag was changed to 4% by mass. Similarly to Comparative Example 1, tight contact was permitted on the catalyst thus obtained to give a sample of Comparative Example 2.

### Example 1: 5% by mass Ag/TiO₂ + PM (5% by mass)

A catalyst was obtained in a similar manner to Comparative Example 1, except that the content of Ag was changed to 5% by mass.
Similarly to Comparative Example 1, tight contact was permitted on the catalyst thus obtained to give a sample of Example 1.

### Example 2: 10% by mass Ag/TiO₂ + PM (5% by mass)

A catalyst was obtained in a similar manner to Comparative Example 1, except that the content of Ag was changed to 10% by mass. Similarly to Comparative Example 1, tight contact was permitted on the catalyst thus obtained to give a sample of Example.2.

### Example 3: 20% by mass Ag/TiO₂ + PM (5% by mass)

A catalyst was obtained in a similar manner to Comparative Example 1, except that the content of Ag was changed to 20% by mass. Similarly to Comparative Example 1, tight contact was permitted on the catalyst thus obtained to give a sample of Example 3.

### Example 4: 30% by mass Ag/TiO₂ + PM (5% by mass)

A catalyst was obtained in a similar manner to Comparative Example 1, except that the content of Ag was changed to 30% by mass.
Similarly to Comparative Example 1, tight contact was permitted on the catalyst thus obtained to give a sample of Example 4.

### Comparative Example 3: 60% by mass Ag/TiO₂ + PM (5% by mass)

A catalyst was obtained in a similar manner to Comparative Example 1, except that the content of Ag was changed to 60% by mass. Similarly to Comparative Example 1, tight contact was permitted on the catalyst thus obtained to give a sample of Comparative Example 3.

### Comparative Example 4: PM

PM powders collected from a diesel generator were employed as a sample of Comparative Example 4.

### Comparative Example 5: 0.76% by mass Pt/Al₂O₃ + PM (5% by mass)

A catalyst was obtained by preparing in a similar manner to Comparative Example 1 using a dinitrodiammine platinum nitrate solution of commercially available special grade reagent, Al₂O₃, and distilled water. Similarly to Comparative Example 1, tight contact was permitted on the catalyst thus obtained to give a sample of Comparative Example 5.

### Comparative Example 6: TiO₂ + PM (5% by mass)

JRC-TIO-4 that is a reference catalyst according to the Catalysis Society of Japan was subjected to a similar procedure to Comparative Example 1, and thereafter tight contact was permitted to give a sample of Comparative Example 6.

### Comparative Example 7: Ag₂O + PM (5% by mass)

PM in an amount of 0.5 mg was mixed with 9.5 mg of silver oxide (catalyst N) of commercially available special grade reagent, and thereafter tight contact was permitted to give a sample of Comparative Example 7.

### Comparative Example 8: 5% by mass Ag/α-Al₂O₃ + PM (5% by mass)

A catalyst was obtained by preparing in a similar manner to Comparative Example 1 using commercially available α-Al₂O₃, silver nitrate, and distilled water. Similarly to Comparative Example 1, tight contact was permitted on the catalyst thus obtained to give a sample of Comparative Example 8.

### Comparative Example 9: 5% by mass Ag/γ-Al₂O₃ + PM (5% by mass)

A catalyst was obtained by preparing in a similar manner to Comparative Example 1 using commercially available γ-Al₂O₃, silver nitrate, and distilled water. Similarly to Comparative Example 1, tight contact was permitted on the catalyst thus obtained to give a sample of Comparative Example 9.

### Comparative Example 10_{:} 1 % by mass Ag/TiO₂ + PM (5% by mass)

A catalyst was obtained in a similar manner to Comparative Example 1, except that the content of Ag was changed to 1% by mass. Similarly to Comparative Example 1, tight contact was permitted on the catalyst thus obtained to give a sample of Comparative Example 10.

### Comparative Example 11: 2% by mass Ag/TiO₂ + PM (5% by mass)

A catalyst was obtained in a similar manner to Comparative Example 1, except that the content of Ag was changed to 2% by mass. Similarly to Comparative Example 1, tight contact was permitted on the catalyst thus obtained to give a sample of Comparative Example 11.

### Comparative Example 12: 5% by mass Pt/TiO₂ + PM (5% by mass)

A catalyst was obtained by preparing in a similar manner to Comparative Example 1 using JRC-TIO-4 that is a reference catalyst according to the Catalysis Society of Japan, a dinitrodiammine platinum nitrate solution of commercially available special grade reagent, and distilled water. Similarly to Comparative Example 1, tight contact was permitted on the catalyst thus obtained to give a sample of Comparative Example 12.

### Comparative Example 13: 5% by mass Ag/CeO₂ + PM (5% by mass)

A.catalyst was obtained by preparing in a similar manner to Comparative Example 1, using JRC-CEO-001 that is a reference catalyst according to the Catalysis Society of Japan, silver nitrate, and distilled water. Similarly to Comparative Example 1, tight contact was permitted on the catalyst thus obtained to give a sample of Comparative Example 13.

### Comparative Example 14: 5% by mass Ag/MnO₂ + PM (5% by mass)

A catalyst was obtained by preparing in a similar manner to Comparative Example 1 using MnO₂ that is a commercially available reagent; silver nitrate, and distilled water. Similarly to Comparative Example 1, tight contact was permitted on the catalyst thus obtained to give a sample of Comparative Example 14.

### PM Combustion Test

The catalyst obtained in each of the Examples and Comparative Examples was subjected to a PM combustion test based on TG/DTA, where the PM combustion characteristics of each catalyst were determined. The test conditions were as in the following.

Measurement apparatus: "EXSTER6000TG/DTA" manufactured by Seiko Instruments Inc.
Heating conditions: 10°C/min
Atmosphere: dry air
Amount of sample: 10 mg
Flow rate: SV = 60,000 h⁻¹
Contact state: mixing while grinding with a mortar and a pestle to no larger than 2 µm (tight contact: TC)

### Discussion

PM combustion characteristics of the catalyst obtained in each of the Examples and Comparative Examples are discussed below.

As a result of a PM combustion test based on TG/DTA performed with respect to Examples 1 to 7 and Comparative Examples 1 to 11, the PM combustion peak temperature for each catalyst was obtained as shown in Table 1. For reference, the temperature when maximum heat generation is exhibited in a TG/DTA chart obtained as a result of TG/DTA measurements is defined as the PM combustion peak temperature (°C).

**Table 1**

| | Catalyst composition | PM combustion peak temperature (°C) |
|---|---|---|
| Comparative Example 1 | 3% by mass Ag/TiO₂ + PM (5% by mass) | 354 |
| Comparative Example 2 | 4% by mass Ag/TiO₂ + PM (5% by mass) | 340 |
| Example 1 | 5% by mass Ag/TiO₂ + PM (5% by mass) | 333 |
| Example 2 | 10% by mass Ag/TiO₂ + PM (5% by mass) | 334 |
| Example 3 | 20% by mass Ag/TiO₂ + PM (5% by mass) | 333 |
| Example. 4 | 30% by mass Ag/TiO₂ + PM (5% by mass) | 331 |
| Comparative Example 3 | 60% by mass Ag/TiO₂ + PM (5% by mass) | 339 |
| Comparative Example 4 | PM | 665 |
| Comparative Example 5 | 0.76% by mass Pt/Al₂O₃ + PM (5% by mass) | 247/561 |
| Comparative Example 6 | TiO₂ + PM (5% by mass) | 551 |
| Comparative Example 7 | Ag₂O + PM (5% by mass) | 244 |
| Comparative Example 8 | 5% by mass Ag/α-Al₂O₃ | 422 |
| Comparative Example 9 | 5% by mass Ag/γ-Al₂O₃ | 616 |
| Comparative Example 10 | 1% by mass Ag/TiO₂ + PM (5% by mass) | 525 |
| Comparative Example 11 | 2% by mass Ag/TiO₂ + PM (5% by mass) | 440 |
| Comparative Example 12 | 5% by mass Pt/TiO₂ + PM (5% by mass) | 510 |
| Comparative Example 13 | 5% by mass Ag/CeO₂ + PM (5% by mass) | 359 |
| Comparative Example 14 | 5% by mass Ag/MnO₂ + PM (5% by mass) | 442 |

As shown in Table 1, the combustion peak temperature of the PM alone in Comparative Example 4 was 665°C. To the contrary, in the case of the noble metal based material as in Comparative Example 5 (0.76% by mass Pt/Al₂O₃), two combustion peaks were found, i.e. the first combustion peak temperature at 247°C and the second combustion peak temperature at 561°C. From the results of analyses of the generated gas in connection with each combustion peak, it has been proven that the first peak was derived from the organic component, while the second peak was derived from the soot. Thus, it was revealed that, although the noble metal based materials may be effective in combustion of organic components, their effect in lowering the temperature in the combustion of soot could hardly be expected. It was presumed to result from a tendency of early dissociative adsorption towards the active species in an oxidative reaction on the active species surface to occur with the organic components that are more thermally unstable than the soot.

On the other hand, the PM combustion peak temperature in Comparative Example 3 (TiO₂) was 551°C, in which almost similar PM combustion performance was exhibited to that of the noble metal based catalyst. This finding is believed to depend on the particle size of the catalyst, and it is envisaged that the combustion of the PM occurred due to a reaction with surface oxygen, although the amount could be slight, as a result of small particle size which may lead to an increase in the contact points with the PM.

Meanwhile, the exhaust gas temperature discharged from diesel engines is as low as about 200°C to 450°C. From the foregoing, it was proven that, although sufficient combustion of organic components could be executed in the temperature range of the exhaust gas by using a noble metal based material, continuous combustion of the soot was difficult in the temperature range of the exhaust gas without carrying out a regeneration process or the like, even though a noble metal based material was used.

To the contrary, in Examples 1 to 4, use in combination of Ag with TiO₂ significantly lowering of the PM combustion peak temperature could be achieved to 331°C to 334°C by combining Ag with TiO₂. In Comparative Examples 1 to 3, use in combination of Ag with TiO₂ significantly lowering of the PM combustion peak temperature could be achieved to 339°C to 354°C by combining Ag with TiO₂. As is clear from the results in Comparative Example 7, Ag₂O originally has a high activity toward the PM.

The high activity results from a reductive reaction caused by Ag₂O upon contact with the PM. However, since Ag₂O has a property to metalate through decomposition by a reductive reaction, it cannot be practically used alone in light of the heat resistance.

Accordingly, decomposition of Ag₂O can be suppressed by loading Ag on TiO₂ as in Examples 1 to 4 and Comparative Examples 1-3. Although Ag is predominantly present in the form of an Ag metal on TiO₂, it is present as Ag₂O on the outermost surface thereof. Although Ag₂O on the outermost surface reduced by the oxidative reaction is metalated into Ag in part, it effectively acts as a catalyst since it is supported on TiO₂. In other words, since Ag having a large specific surface area due to very small mean primary particle size, and being supported on non-porous TiO₂ is fine and in a highly dispersed state, such Ag turns into Ag₂O by forcedly incorporating oxygen in the ambient air, and thus it can be activated again. It was presumed that, as a result of enabling the active species Ag₂O to be stably formed on TiO₂ by repeating such metalation into Ag and turning into Ag₂O, efficient combustion of the PM at low temperatures could be carried out.

In this respect, speculation from the PM combustion peak temperatures in Comparative Examples 5 and 6 (Ag/α-Al₂O₃ and Ag/γ-Al₂O₃) may be made. More specifically, use in combination with Ag and α-Al₂O₃ having a small specific surface area and being non-porous resulted in a PM combustion peak temperature at 422°C. In contrast, use in combination with Ag and γ-Al₂O₃ having a great specific surface area and being porous resulted in a PM combustion peak temperature at 616°C. Accordingly, it was believed that the PM combustion characteristics are influenced not by the specific surface area of the support, but by the shape (morphology) of the support.

In other words, it was envisaged that Ag is present on the outer surface of the support and thus there are many contact points of Ag with the PM in the case of α-Al₂O₃, while Ag is present also in the pores, thereby leading to low activity due to fewer contact points with the PM in the case of γ-Al₂O3.

To the contrary, since TiO₂ has a very small mean primary particle size, it has a great specific surface area, and also is non-porous similarly to α-Al₂O₃. Therefore, it is presumed that the active species Ag could be more advantageously utilized without excess, thereby leading to a high activity.

As in the foregoing, it was assumed that there is a preferable range of the amount of Ag in Ag/TiO₂ since the number of the contact points of Ag with the PM is of importance. Thus, using the measurement results of Examples 1 to 4 with Comparative Examples 1-3 and Comparative Examples 6, 10 and 11, a relationship of Ag content (% by mass) with the PM combustion peak temperature (°C) is shown in FIG. 4. As is clear from FIG. 4, it was revealed that, when the Ag content falls within the range of 3% by mass to 60% by mass, the PM combustion peak temperature could be sufficiently lowered, whereby a superior PM combustion activity could be achieved. Moreover, when the Ag content falls within the range of 5% by mass to 30% by mass, the PM combustion peak temperature was further lowered, whereby a superior PM combustion activity could be achieved.

In addition, a discussion with regard to cases in which a noble metal other than Ag was loaded on TiO₂ is provided. In Comparative Example 12 (Pt/TiO₂), low activity was exhibited with the PM combustion peak temperature being as high as 510°C since the active species was not Ag₂O. From this result, it was suggested that Ag has specifically a high activity in connection with the PM combustion among noble metal elements. It should be noted that the PM combustion peak temperature at 513°C was found when the amount of Pt loading increased to 10% by mass in Comparative Example 12; and the PM combustion peak temperature at 517°C was found when the amount increased to 20% by mass, and thus it has been ascertained that an increase in the amount of Pt loading results in lowering of the PM combustion activity.

Furthermore, a discussion with regard to combinations of oxides other than TiO₂ with Ag is provided. The PM combustion peak temperatures in Comparative Example 13 (Ag/CeO₂) and Comparative Example 11 (Ag/MnO₂) were 359°C and 442°C, respectively, which were higher as compared with Ag/TiO₂ in the Examples of the present invention, which indicated inferior PM combustion activities. Such events are believed to result from fewer contact points of Ag with the PM due to a larger particle size of the support.

An exhaust gas purification catalyst which enables combustion of PM in an efficient manner at lower temperatures than those traditionally employed, manufacturing method thereof, and an exhaust gas purification filter are provided. An exhaust gas purification catalyst for use in cleaning particulate matter included in exhaust gas discharged from an internal combustion engine is provided, and the exhaust gas purification catalyst is characterized by including Ag supported on TiO₂, and manufacturing method thereof. In addition, an exhaust gas purification filter that collects and cleans particulate matter included in the exhaust gas discharged from an internal combustion engine is provided, and the exhaust gas purification filter is characterized by including a filter main body to which the exhaust gas purification catalyst including Ag supported on TiO₂ was applied.

## Claims

1. Use of an exhaust gas purification catalyst which is applied to an exhaust gas purification filter in cleaning particulate matter included in exhaust gas discharged from an internal combustion engine,
the catalyst consisting of Ag supported on TiO₂, wherein the content of the Ag with respect to the TiO₂ is 5% by mass to 30% by mass, wherein the Ag contained in the catalyst exists predominantly as Ag metal except for the outermost surface wherein it exists as Ag₂O.

2. An exhaust gas purification filter that collects and cleans particulate matter included in exhaust gas discharged from an internal combustion engine, the filter comprising a filter main body to which the exhaust gas purification catalyst according to claim 1 was applied.

3. The exhaust gas purification filter according to claim 2, wherein the filter main body is of a wall-flow type comprising a porous refractory ceramic.

4. A manufacturing method for an exhaust gas purification catalyst which is applied to an exhaust gas purification filter for purifying particulate matter included in exhaust gas emitted from an internal combustion engine, the method comprising:
a first step of preparing an aqueous solution including TiO₂ and an Ag compound;
a second step of obtaining an exhaust gas purification catalyst in which Ag is supported on TiO₂ by baking the aqueous solution prepared in the first step after evaporating to dryness, wherein the content of the Ag with respect to the TiO₂ is 5% by mass to 30% by mass; and
a third step of applying said exhaust gas purification catalyst onto a filter main body.

## Patentansprüche

1. Verwendung eines Abgasreinigungskatalysators, der auf einen Abgasreinigungsfilter aufgebracht wird, zur Reinigung von Partikeln, die sich in Abgas, das aus einem Verbrennungsmotor abgeführt wird, befinden,
wobei der Katalysator aus Ag, geträgert auf TiO₂, besteht, wobei der Gehalt des Ag hinsichtlich des TiO₂ 5 Massen-% bis 30 Massen-% beträgt, wobei das im Katalysator enthaltene Ag vorwiegend als Ag-Metall vorliegt, mit Ausnahme der äußersten Oberfläche, wo es als Ag₂O vorliegt.

2. Abgasreinigungsfilter, der Partikel, die sich in Abgas, das aus einem Verbrennungsmotor abgeführt wird, befinden, sammelt und reinigt, wobei der Filter einen Filterhauptkörper umfasst, auf den der Abgasreinigungskatalysator nach Anspruch 1 aufgebracht wurde.

3. Abgasreinigungsfilter nach Anspruch 2, wobei der Filterhauptkörper von einem Wandflußtyp (wall-flow type) umfassend eine poröse feuerfeste Keramik ist.

4. Herstellungsverfahren für einen Abgasreinigungskatalysator, der auf einen Abgasreinigungsfilter aufgebracht wird, zur Reinigung von Partikeln, die sich in Abgas, das aus einem Verbrennungsmotor emittiert wird, befinden, wobei das Verfahren umfasst:
einen ersten Schritt der Herstellung einer wässrigen Lösung enthaltend TiO₂ und eine Ag-Verbindung;
einen zweiten Schritt des Erhaltens eines Abgasreinigungskatalysators, in welchem Ag auf TiO₂ geträgert wird, durch Backen der im ersten Schritt vorbereiteten wässrigen Lösung nach Verdampfen zur Trockenheit, wobei der Gehalt des Ag hinsichtlich des TiO₂ 5 Massen-% bis 30 Massen-% beträgt; und
einen dritten Schritt des Aufbringens des Abgasreinigungskatalysators auf einen Filterhauptkörper.

## Revendications

1. Utilisation d'un catalyseur de purification de gaz d'échappement qui est appliqué à un filtre de purification de gaz d'échappement afin de nettoyer une matière particulaire présente dans un gaz d'échappement déchargé par un moteur à combustion interne, le catalyseur étant constitué d'Ag supporté sur du TiO₂, dans lequel la teneur en Ag par rapport au TiO₂ est de 5 % en masse à 30 % en masse, dans lequel l'Ag contenu dans le catalyseur est essentiellement présent sous la forme d'Ag métallique, excepté à la surface extérieure extrême où il est présent sous la forme d'Ag₂O.

2. Filtre de purification de gaz d'échappement qui collecte et nettoie une matière particulaire présente dans un gaz d'échappement déchargé par un moteur à combustion interne, le filtre comprenant un corps principal de filtre auquel le catalyseur de purification de gaz d'échappement selon la revendication 1 a été appliqué.

3. Filtre de purification de gaz d'échappement selon la revendication 2, dans lequel le corps principal de filtre est du type à écoulement de paroi comprenant une céramique réfractaire poreuse.

4. Procédé de fabrication d'un catalyseur de purification de gaz d'échappement qui est appliqué à un filtre de purification de gaz d'échappement afin de purifier une matière particulaire présente dans un gaz d'échappement émis par un moteur à combustion interne, le procédé comprenant:
une première étape consistant à préparer une solution aqueuse contenant du TiO₂ et un composé d'Ag;
une deuxième étape consistant à obtenir un catalyseur de purification de gaz d'échappement dans lequel l'Ag est supporté sur le TiO₂ en cuisant la solution aqueuse préparée à la première étape après une évaporation jusqu'à la sécheresse, dans lequel la teneur en Ag par rapport au TiO₂ est de 5 % en masse à 30 % en masse; et
une troisième étape consistant à appliquer ledit catalyseur de purification de gaz d'échappement sur un corps principal de filtre.
